# EUROPÄISCHE PATENTSCHRIFT

(11) **EP 0 925 917 B1**
(45) Veröffentlichungstag und Bekanntmachung des Hinweises auf die Patenterteilung: **21.03.2001**
(21) Anmeldenummer: 98121721.9
(22) Anmeldetag: 14.11.1998
(51) Int. Cl.: B41F 33/00

(54) **Messsystem**
Measuring system
Système de mesure

(30) Priorität: 29.11.1997 DE 29721199 U
(43) Veröffentlichungstag der Anmeldung: 30.06.1999
(73) Patentinhaber: MAN Roland Druckmaschinen AG, 63075 Offenbach (DE)
(72) Erfinder: Lampersberger, Franz, 85609 Aschheim (DE); Rakitsch, Peter, 85368 Moosburg (DE); Tutsch, Rainer Dr., 80636 München (DE); Six, Hans Joachim Dr., 81669 München (DE); Wendt, Karsten Dr., D-63179 Obertshausen (DE)
(74) Vertreter: Stahl, Dietmar

(56) Entgegenhaltungen:
- EP-A- 0 228 347
- EP-A- 0 357 986
- EP-A- 0 798 117
- DE-U- 9 408 442

## Beschreibung

Die Erfindung betrifft ein Meßsystem gemäß dem Oberbegriff von Anspruch 1.

Zur Steuerung des Druckprozesses sowie zur Qualitätsanalyse von Druckprodukten ist es bekannt, neben dem eigentlichen Sujet Meßfelder mitzudrucken, die mittels Meßgeräten abtastbar sind. Vorzugsweise werden dazu Meßfelder zumindest abschnittsweise zu Meßstreifen zusammengefaßt, d.h. die einzelnen Meßfelder reihen sich zu einem Streifen. Zur Kontrolle von Offsetdruckprodukten werden zumeist Densitometer eingesetzt, bei denen die Remissionen der Meßfelder durch komplementär zu den Druckfarben gestaltete Filter- bzw. Meßkanäle erfaßt und durch Logarithmieren zu einem Farbdichtewert umgerechnet werden. Der Vorteil der Farbdichtemessung ist insbesondere darin zu sehen, daß der Dichtewert in einem einfachen Zusammenhang zu der Farbschichtdicke steht und die heute verwendeten Densitometer eine zeitlich sehr hohe Auflösungsrate haben, d.h. an einem Meßfeld gegebener Größe eine große Zahl von Meßwerten gewonnen werden kann.

Zur Analyse von zu Farbmeßstreifen aneinander gereihter Meßfelder werden in einer bzw. in zwei Richtungen verfahrbare Meßsysteme verwendet, bei denen der Meßkopf (Densitometer, Spektralphotometer) in der X-Y-Ebene verfahrbar ist. Dazu ist der Meßkopf an einer das Druckprodukt überspannenden Brücke verfahrbar aufgehängt, wobei die Brücke ihrerseits gegenüber der das Druckprodukt aufnehmenden Unterlage verfahren werden kann. Der Meßkopf ist relativ zur Brücke sowie die Brücke relativ zur Unterlage durch zugeordnete Stellmotore bewegbar.

Mittels eines derartigen Meßsystems können abschnittsweise über einen Druckbogen verteilte Meßstreifen bzw. einzelne Meßfelder abgetastet werden, wobei der Meßablauf zuvor programmiert (Teach-In) wird und dann bei der eigentlichen Kontrolle der Druckprodukte automatisiert abläuft.

Den vielen Vorteilen der Densitometrie zur Druckkontrolle steht entgegen, daß die Farbdichtewerte nicht bzw. nur unvollständig und unter bestimmten Annahmen zu farbmetrischen Werten umrechenbar sind bzw. mit farbmetrischen Werten verglichen werden können. Dies hat seinen Grund darin, daß die Farbmetrik auf anderen Filtern basiert, nämlich auf Filtern, die dem menschlichen Farbempfindungssinn (X-, Y-, Z-Normspektralwertkurven) nachempfunden sind. Um neben Farbdichtemeßwerten zusätzlich auch farbmetrische Meßwerte, also Farborte gewinnen zu können, ist es nötig, ein Densitometer (3-, 4-kanalig) zusätzlich mit einem Farbmeßsystem zu erweitern, wobei dieses als 3-Bereichsmeßgerät bzw. Spektralmeßsystem ausgebildet sein kann. Auch ist es möglich, das densitometrisch/farbmetrisch arbeitende Meßsystem als Spektralmeßkopf auszubilden, wobei die Wichtung der empfangenen Remissionen rein rechnerisch erfolgt, d.h. die erfaßten Spektren werden durch vorgegebene Filterfunktionen bewertet. Von Nachteil ist aber, daß die Integrationszeiten derartiger Spektralphotometer um ein Vielfaches größer sind als die von bekannten Densitometern. Somit können pro Zeiteinheit weniger Daten empfangen werden und es stehen auch weniger Daten für weitere Analysezwecke zur Verfügung. Dieser Nachteil wiegt schwer, wenn ein derartiges spektralphotometrisch ausgebildetes Meßsystem bei einer sogenannten Scanning-Meßanlage verwendet wird, bei der der Meßkopf relativ zu den auszumessenden Meßfeldern, dem Meßstreifen bewegt wird. Um den von einem Meßstreifen benötigten Platz auf dem Druckstoff zu minimieren, werden die Meßfelder mit möglichst kleinen Abmessungen versehen, so daß bei einer gegebenen Verfahrgeschwindigkeit des Meßkopfes relativ zum Bedruckstoff und somit zum Meßfeld nur eine geringe Zeit zur Verfügung steht. Bei einer hohen Integrationszeit des Meßsystems und daraus resultierenden geringen Samplingrate stehen pro Meßfeld nur wenige Daten zur Verfügung. Ein weiterer Nachteil eines rein spektral ausgelegten Multimeßkopfes ist, daß bei der Densitometrie zur Ausschaltung von durch frische Farbe bedingten Glanzeffekten häufig zuschaltbare Polarisationsfilter vorgesehen sind, wohingegen für die standardgerechte Ermittlung von Farborten keine Filter benutzt werden dürfen. Ein spektralphotometrisches Meßgerät, aus den Remissionswerten zu berechnen gestattet, ist sowohl Farbdichte als auch farbmetrische Meßwerte gewinnen lassen ist beispielsweise aus der EP 0 228 347 bereits bekannt.

Ein kombinierter Meßkopf, bestehend aus einem Densitometer zur Gewinnung von Farbdichtedaten sowie einem 3-Bereichs-Meßkopf für farbmetrische Meßwerte ist aus der DE 3 830 731 A1 bekannt. Auch ist hieraus bekannt, einen derartigen Kombimeßkopf an einer relativ zum Druckprodukt verfahrbaren Meßanlage anzubringen. Nachteilig ist hierbei, daß insbesondere miniaturisiert aufgebaute 3-Bereichs-Meßköpfe nicht den Anforderungen an die Meßgenauigkeit genügen. Ferner sind bei einem 3-Bereichs-Meßkopf unterschiedliche Beleuchtungsbedingungen sowie Bewertungsfunktionen nur mit unverhältnismäßig hohem Aufwand realisierbar, was einem miniaturisierten Aufbau ebenfalls entgegen steht.

Aus der DE 195 30 185 C2 ist ein spektraler Meßkopf nebst einem Farbdichtemeßkopf in integrierter Bauweise bekannt. Hierbei werden durch unterschiedliche Meßkanäle sowohl spektrale Remissionen als auch Farbdichtemeßwerte gewonnen. Nachteilig ist hierbei, daß, wie bereits vorstehend angedeutet, die Integrationszeiten für die Farbdichtemessung und die spektrale Remissionswertgewinnung sehr unterschiedlich sind. Zur Gewinnung von Farbmeßwerten mittels des spektralem Meßsystem muß der Meßkopf relativ genau zum auszumessenden Meßfeld justiert werden, was ein automatisiertes Verfahren erschwert. Ein genaues Justieren des Meßkopfes zum Ausmessen der Meßfelder ist aber nötig, um beispielsweise zu vermeiden, daß fehlerhafte Meßwerte dadurch ermittelt werden, daß gemessen wird, wenn die Position des Meßkopfes mit einer Meßfeldgrenze übereinstimmt. In diesem ungünstigen Fall würde eine Farbe ermittelt, die einer Mischung der Farben von Meßfeld und Bedruckstoff bzw. einer Mischung zwischen den Farben zweier benachbarter Meßfelder entspräche. Derartige Situation lassen sich durch Auswertung des Verlaufs der zeitlich kurz vorher gewonnenen Farbdichtemeßwerte gut erkennen und durch Berechnung der richten Meßposition vermeiden.

Aus dem Stand der Technik sind zahlreiche Lösungen bekannt, um mittels verfahrbarer Densitometer sowohl Meßfeldgrenzen als auch die Lage und Orientierung eines auf dem Bedruckstoff befindlichen Farbmeßstreifens festzustellen. So ist ein verfahrbares Densitometer bekannt, bei dem der Druckbogen mit darauf befindlichem Meßstreifen entlang einer Anlageschiene aufgelegt wird und das Densitometer zunächst einen Suchlauf senkrecht zur Bogenkante und somit quer zur Erstreckungsrichtung des Meßstreifens ausführt. Durch diesen Suchlauf in Y-Richtung wird der Abstand des Meßstreifens zur Bedruckstoffkante bestimmt, woraufhin dann der Abtastvorgang des Densitometers durch das Bewegen in X-Richtung (Richtung des Meßstreifens) erfolgt. Weiterhin ist es bekannt, ein verfahrbares Densitometer mit einer Suchoptik zu versehen, welche aus einer Projektionseinrichtung besteht, vermittels der in Abtastrichtung vor dem Densitometer zwei Lichtflecke auf den Bedruckstoff projiziert werden, welche einen Abstand haben, der geringer ist als die Breite der auszumessenden Meßfelder. Bewegt sich ein derartig ausgerüstetes Densitometer in der Mitte des auszumessenden Meßstreifens, so wird das durch die beiden projizierten Lichtflecke reflektierte Licht durch die jeweilige Farbe des Meßfeldes in gleicher Weise reflektiert, was mittels zugeordneter Detektoren feststellbar ist. Gerät das Densitometer außer Spur, so projiziert der eine Beleuchtungsstrahl einen Lichtfleck auf den unbedruckten Bedruckstoff, wohingegen der andere Projektionsstrahl von der Farbe des Meßfeldes reflektiert wird. Aus diesen unterschiedlichen Remissionswerten ist dann bestimmbar, in welche Richtung das Densitometer verfahren werden muß, um wieder der Richtung des Meßstreifens mittig folgen zu können.

Weiterhin ist es bei mit hoher Ortsauflösung arbeitenden Densitometern bekannt, daß während eines Meßlaufes die anfallenden Meßdaten zur Feststellung der Farbe sowie zur Bestimmung der Grenzen bzw. Feldmitten der Meßfelder verarbeitetet werden. Das geschieht durch Analyse der mehrkanalig gewonnenen Farbdichtemeßwerte und nachfolgender Differentiation des Verlaufs der Farbdichten über den in Abtastrichtung zurückgelegten Weg des Meßkopfes. Aus den so gewonnenen Meßfeldgrenzen läßt sich die Mitte der Meßfelder genau bestimmen. Da bei dieser Technik für jedes Meßfeld eine Vielzahl von Daten anfällt, läßt sich außerdem durch Mittelwertbildung eine größere Zuverlässigkeit der Meßwerte erreichen.

Aufgabe der vorliegenden Erfindung ist es daher, ein Meßsystem gemäß dem Oberbegriff von Anspruch 1 dahingehend zu erweitern, daß Farbdichte und spektrale, vorzugsweise farbmetrische Meßwerte liefernde Meßeinrichtungen ohne zusätzlichen bautechnischen Aufwand miteinander kombiniert werden können, wobei die zu schaffende Kombination beider Meßprinzipien optimal an die Aufgabe eines in Längsrichtung abzutastenden Meßstreifens angepaßt ist.

Gelöst wird diese Aufgabe durch die kennzeichnenden Merkmale von Anspruch 1. Weiterbildungen der Erfindung ergeben sich aus den Unteransprüchen.

Erfindungsgemäß ist vorgesehen, daß das die Farbdichtewerte liefernde Densitometer in Abtastrichtung dem vorzugsweise zur Erfassung von farbmetrischen Daten vorgesehenen Meßkopf vorgeordnet ist, wobei der Abtastfleck des Densitometers vom Abtastfleck des Spektralphotometers einen derartigen Abstand aufweist, daß die densitometrischen Werte zur Analyse über die Art, Farbe und/oder Lage des jeweiligen Meßfeldes ausgewertet werden können und zur Triggerung des spektralen Meßsystems verwendbar sind. Der in Abtastrichtung (X-Richtung) vorgesehene Abstand zwischen dem Abtastfleck des Densitometers und des Spektralphotometers ist dabei auf die Abtastgeschwindigkeit v dieses Meßsystems derartig abgestimmt, daß die dem Densitometer und dem Spektralmeßkopf nächgeschaltete Auswerteelektronik die vorgesehenen Auswertung nach dem vorgeschriebenen Algorithmus vornehmen kann.

Gemäß einer Ausgestaltungsform der Erfindung ist vorgesehen, daß die beispielsweise um einen Faktor 40 häufiger anfallenden Meßwerte des Densitometers zur Bestimmung der Lage und der Grenzverläufe der Meßfelder innerhalb des Meßstreifens verwendet werden und daraus die jeweilige Meßfeldmitte bestimmt wird. Zur Bestimmung der Meßfeldgrenzen sowie der Mitte des jeweiligen Meßfeldes können an sich bekannte Auswertealgorithmen Verwendung finden. Dabei ist es möglich, zur Bestimmung der Meßfeldgrenzen die als Funktion der Abtastrichtung (X-Richtung) erfaßten Farbdichtewerte einer zweifachen Differentiation zu unterziehen, d.h. die zweite Ableitung nach dem Ort zu bilden. Aus der Anzahl der Meßwerte, welche sich innerhalb eines vorgegebenen Toleranzbereiches nicht ändern, sind ferner die Meßfeldgröße und somit auch die Mitte eines jeweiligen Meßfeldes bestimmbar. Eine derartig bestimmte Meßfeldmitte kann sodann unter Berücksichtigung der Abtastgeschwindigkeit v und des Abstandes zwischen den Abtastflecken des Densitometers und des spektralen Meßsystems zur Generierung eines Triggerzeitpunktes für die spektralphotometrische Messung (Farbmessung) verwendet werden.

Gemäß der voranstehend skizzierten Ausführungsform der Erfindung ist es möglich, die insbesondere mehrkanalig anfallenden Farbdichtemeßwerte (C-, M-, Y-, K-Werte) zur Identifikation des jeweiligen Meßfeldes innerhalb des Meßstreifens zu verwenden. Auch hier können an sich bekannte Identifikationsverfahren Verwendung finden, wonach aufgrund der Farbdichtemeßwerte die Art und der Aufbau des Meßstreifens bestimmt wird. Dadurch ist es möglich, die zeitaufwendige spektralphotometrische Messung lediglich an den dafür vorgesehenen Meßfeldern eines bestimmten Meßstreifens auszulösen.

Gemäß einer bevorzugten Weiterbildung der Erfindung ist vorgesehen, daß das aus Densitometer und Spektralphotometer bestehende Meßsystem um eine an sich bekannte Spursuch-Optik erweitert wird, durch welche insbesondere der erfindungsgemäße Meßkopf senkrecht zur Erstreckungsrichtung des Meßstreifens durch eine zusätzliche Bewegung nachführbar ist. Vorzugsweise findet hier eine Spursuch-Optik Verwendung, welche zwei nebeneinanderliegende Lichtpunkte auf die Meßfelder projiziert, wobei aus den Remissionsunterschieden der projizierten Lichtpunkte ggf. Korrekturbewegungen in Y-Richtung (senkrecht zur Erstreckungsrichtung des Meßstreifens) generierbar sind.

Des weiteren erfolgt die Erläuterung zweier Ausführungsbeispiele der Erfindung anhand der Zeichnungen.

Es zeigt:
- Fig. 1: die erfindungsgemäße Anordnung eines Densitometers mit nachgeordnetem Spektralphotometer, und
- Fig. 2: die um eine Spursuch-Optik erweiterte Anordnung gemäß Figur 1 zur Generierung von Korrekturbewegungen in Y-Richtung.

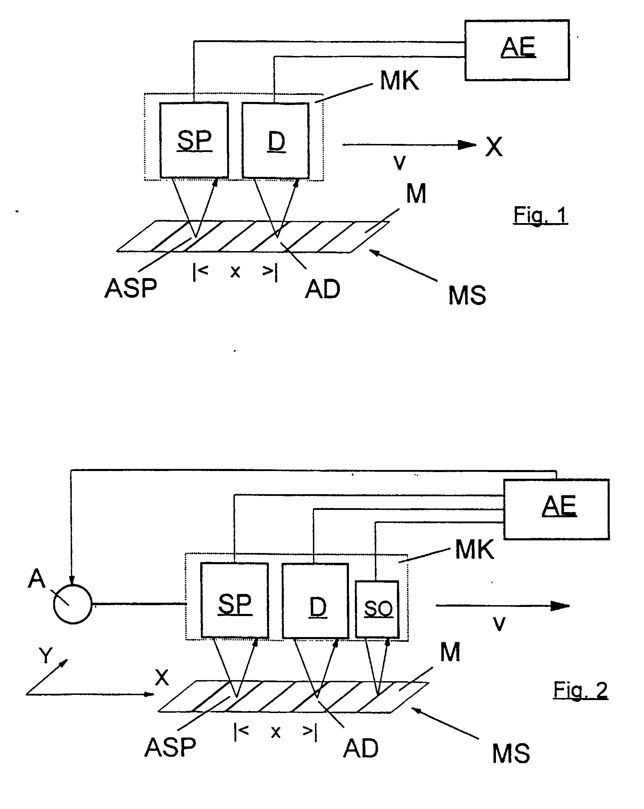

Das erfindungsgemäße Meßsystem (Meßkopf MK) besteht gemäß Figur 1 aus einem Densitometer D, dem in Abtastrichtung X (Scan-Richtung des Meßsystems) ein Spektralphotometer SP nachgeordnet ist. Der Meßkopf MK dient dem Abtasten von Meßfeldern M eines Meßstreifens MS.

Die Abtastflecken AD, ASP der Optiken des Densitometers D und des Spektralphotometers SP sind dabei um einen vorgegebenen Abstand x in der Scan-Richtung des Meßsystems voneinander entfernt. Die Meßsignale des Densitometers D und des Spektralphotometers SP werden einer Auswerteelektronik AE zugeführt, wobei dort die Signale des Densitometers D in der bereits zuvorstehend skizzierten Weise analysiert werden. Dabei werden insbesondere die Farbdichtemeßwerte des Densitometers D zur Bestimmung der Meßfeldart, der Meßfeldfarbe sowie der Grenzen analysiert.

Der Abstand x der Abstastflecken AD, ASP des Densitometers D und des Spektralphotometers SP, ist bezogen auf die Abtastgeschwindigkeit v des Meßsystems, derartig gewählt, daß die durch die Auswerteelektronik AE vorzunehmenden Arbeitsschritte ausgeführt werden können, um dann mittels Spektralphotometer SP an einem so bestimmten Ort innerhalb eines Meßfeldes M des Meßstreifens MS eine Messung durchführen zu können.

Figur 2 zeigt eine bevorzugte Weiterbildung des erfindungsgemäßen Meßsystems, bestehend aus dem Densitometer D und dem Spektralphotometer SP. Wie bei der Ausführungsform gemäß Figur 1 sind die Abtastflecken AD, ASP des Densitometers D und des Spektralphotometers SP um die vorgegebene Distanz x in X-Richtung (Scan-Richtung) voneinander entfernt. Dem Densitometer D ist dabei eine Spursuch-Optik SO vorgeordnet, durch welche zusätzlich Informationen über die Lage des Meßsystems in Richtung Y-Richtung (Richtung senkrecht zur Scan-Richtung des Meßsystems) generierbar sind. Das aus der Spursuch-Optik SO, dem Densitometer D und dem Spektralphotometer SP bestehende Meßsystem (Meßkopf MK) ist dabei durch einen zugeordneten Antrieb A sowohl in X-Richtung (Scan-Richtung) als auch senkrecht dazu in Y-Richtung verfahrbar. Bevorzugt ist dazu das Meßsystem an einer den bedruckten Bogen bzw. das Druckprodukt überspannenden Brücke in den beiden Richtungen verfahrbar aufgehängt.

Durch die Signale der Spursuch-Optik SO, welche wie die Signale des Densitometers D und des Spektralphotometers SP der Auswerteelektronik AE zugeführt werden, sind Spurlage-Signale generierbar, durch welche der Antrieb A des Meßsystems zur Ausführung von Korrekturbewegungen in Y-Richtung ansteuerbar ist.

### Bezugszeichenliste

- M: Meßfeld
- MS: Meßstreifen
- MK: Meßkopf
- D: Densitometer
- SP: Spektralphotometer
- AE: Auswerteelektronik
- A: Antrieb
- SO: Spursuch-Optik
- AD: Abtastfleck Densitometer
- ASP: Abtastfleck Spektralphotometer
- x: Abstand X-Richtung
- v: Abtastgeschwindigkeit Meßsystem (Densitometer D, Spektralphotometer SP)

## Patentansprüche

1. Meßsystem zur Erfassung von Remissionen an Druckprodukten, wobei das Meßsystem wenigstens einen Beleuchtungskanal zur Erzeugung eines Abtastfleckes auf einer insbesondere als Meßfeld ausgebildeten Stelle des Bedruckstoffes sowie Abtastkanälen zur Erfassung der vom Bedruckstoff abgegebenen Remissionen aufweist, wobei die Meßkanäle zur Erfassung von Farbdichtewerten und farbmetrischer Werten ausgebildet sind und wobei das Meßsystem relativ zum auszumessenden Bedruckstoff bewegbar ist,
**dadurch gekennzeichnet,**
daß das Meßsystem ein einen Abtastfleck (AD) auf dem Bedruckstoff erzeugendes Densitometer (D) sowie ein einen weiteren Abtastfleck (ASP) auf dem Bedruckstoff erzeugendes Spektralphotometer (SP) aufweist, wobei das Spektralphotometer (SP) in der Abtastrichtung hinter dem Densitometer (D) angeordnet ist und der Abtastfleck (AD) des Densitometers (D) und der Abtastfleck (ASP) des Spektralphotometers (SP) um einen Abstand (x) in Abtastrichtung (X) des Meßsystems voneinander beabstandet sind, und daß durch eine dem Densitometer (D) und dem Spektralphotometer (SP) nachgeschaltete Auswerteelektronik (AE) die mittels des Densitometers (D) erfaßbaren Meßwerte für das Auslösen von Messungen und/oder das Auswerten der mittels des Spektralphotometers (SP) gewonnenen Meßwerte verarbeitbar sind.

2. Meßsystem nach Anspruch 1,
**dadurch gekennzeichnet,**
daß der Abstand (x) zwischen dem Abtastfleck (AD) des Densitometers (D) und dem Abtastfleck (ASP) des Spektralphotometers (SP) in Abtastrichtung (X) in Abhängigkeit der Abtastgeschwindigkeit (v) des Meßsystems sowie der Verarbeitungsgeschwindigkeit der Auswerteelektronik (AE) gewählt ist.

3. Meßsystem nach Anspruch 1 oder 2,
**dadurch gekennzeichnet,**
daß mittels des Densitometers (D) und des Spektralphotometers (SP) die Meßfelder (M) eines in Abtastrichtung (X) verlaufenden Meßstreifens (MS) abtastbar sind, wobei durch die Auswerteelektronik (AE) die Farbdichtewerte des Densitometers (D) zur Bildung von Meßzeitpunkten für das Spektralphotometer (SP) verarbeitbar sind.

4. Meßsystem nach Anspruch 3,
**dadurch gekennzeichnet,**
daß dem Densitometer (D) sowie dem nachgeordneten Spektralphotometer (SP) eine Spursuch-Optik (SO) vorgeordnet ist, vermittels der den in einer Ebene parallel zur Ebene des Bedruckstoffes verfahrbare Meßkopf (MK) einer Spur innerhalb des Meßstreifens (MS) nachführbar ist.

## Claims

1. Measuring system for detecting reflections on printed products, wherein the measuring system has at least one illumination channel for generating a sensing spot on a position of the printed material particularly constructed as a measuring field as well as sensing channels for detecting the reflections emitted by the printed material, wherein the measuring channels are constructed for sensing ink density values and colorimetric values, and wherein the measuring system is movable relative to the printed material to be measured, characterised in that the measuring system has a densitometer (D) generating a sensing spot (AD) on the printed material as well as a spectrophotometer (SP) generating a further sending spot (ASP) on the printed material, wherein the spectrophotometer (SP) is arranged in the sensing direction behind the densitometer (D) and the sensing spot (AD) of the densitometer (D) and the sensing spot (ASP) of the spectrophotometer (SP) are distanced from one another by a distance (x) in the sensing direction (X) of the measuring system and that by means of an evaluation electronics connected downstream to the densitometer (D) and the spectrophotometer (SP), the measured values detected by the densitometer (D) can be processed for triggering measurements and/or the evaluation of the measured values secured by the spectrophotometer (SP).

2. Measuring system according to Claim 1, characterised in that the distance (x) between the sensing spot (AD) of the densitometer (D) and the sensing spot (ASP) of the spectrophotometer (SP) in the sensing direction (X) is chosen in dependence on the sensing speed (v) of the measuring system as well as on the processing speed of the evaluation electronics (AE).

3. Measuring system according to Claim 1 or 2, characterised in that by means of the densitometer (D) and the spectrophotometer (SP), the measuring fields (M) of a measuring strip (MS) running in the sensing direction (X) can be sensed, wherein, by means of the evaluation electronics (AE), the ink density values of the densitometer (D) can be processed to form measuring time points for the spectrophotometer (SP).

4. Measuring system according to Claim 3, characterised in that a track seeking optics (SO) is arranged upstream relative to the densitometer (D) as well as the downstream arranged spectrophotometer (SP), by means of which the measuring head which is movable in a plane parallel to the plane of the printed material can be guidable to a track within the measuring strip (MS).

## Revendications

1. Système de mesure pour détecter des réflexions spectrales sur des produits d'impression, le système de mesure présentant au moins un canal d'éclairage pour engendrer une tache de balayage en un emplacement, réalisé en particulier comme champ de mesure, de la matière d'impression, ainsi que des canaux de balayage pour détecter les réflexions spectrales émises par la matière d'impression, les canaux de mesure étant réalisés pour la détection de valeurs de densité optique et de valeurs colorimétriques et le système de mesure pouvant être déplacé par rapport à la matière d'impression à mesurer,
caractérisé en ce que le système de mesure présente un densitomètre (D) engendrant une tache de balayage (AD) sur la matière d'impression, ainsi qu'un spectrophotomètre (SP) engendrant une autre tache de balayage (ASP) sur la matière d'impression, le spectrophotomètre (SP) étant agencé, dans la direction de balayage, derrière le densitomètre (D) et la tache de balayage (AD) du densitomètre (D) et la tache de balayage (ASP) du spectrophotomètre (SP) étant écartées l'une de l'autre d'une distance (X) dans la direction de balayage (X) du système de mesure, et en ce que, par une électronique d'exploitation (AE) prévue en aval du densitomètre (D) et du spectrophotomètre (SP), les valeurs de mesure pouvant être détectées au moyen du densitomètre (D) peuvent être traitées pour le déclenchement de mesures et/ou l'exploitation des valeurs de mesure obtenues au moyen du spectrophotomètre (SP).

2. Système de mesure selon la revendication 1,
caractérisé en ce que la distance (x) entre la tache de balayage (AD) du densitomètre (D) et la tache de balayage (ASP) du spectrophotomètre (SP), dans la direction de balayage (X), est choisie de façon dépendant de la vitesse de balayage (v) du système de mesure ainsi que de la vitesse de traitement de l'électronique d'exploitation (AE).

3. Système de mesure selon la revendication 1 ou 2,
caractérisé en ce que les champs de mesure (M) d'une bande de mesure (MS) s'étendant dans la direction de balayage (X) peuvent être balayés au moyen du densitomètre (D) et du spectrophotomètre (SP), les valeurs de densité optique du densitomètre (D) pouvant être traitées par l'électronique d'exploitation (AE) pour fournir des instants de mesure pour le spectrophotomètre (SP).

4. Système de mesure selon la revendication 3,
caractérisé en ce qu'une optique de détection (SO) est prévue en amont du densitomètre (D) ainsi que du spectrophotomètre (SP) disposé en aval, au moyen de laquelle on peut suivre la tête de mesure (MK) déplaçable dans un plan parallèle au plan de la matière d'impression sur une piste à l'intérieur de la bande de mesure (MS).
